# EUROPEAN PATENT SPECIFICATION

(11) **EP 3 756 146 B1**
(45) Date of publication and mention of the grant of the patent: **09.04.2025**
(21) Application number: 19707599.7
(22) Date of filing: 13.02.2019
(51) Int. Cl.: G06N 20/20, G06F 21/53, G06F 21/56, G06N 5/01, H04L 9/40

(54) **SUPERVISED LEARNING SYSTEM**
SYSTEM FÜR ÜBERWACHTES LERNEN
SYSTÈME D'APPRENTISSAGE SUPERVISÉ

(30) Priority: 22.02.2018 US 201815901915
(43) Date of publication of application: 30.12.2020
(73) Proprietor: Cisco Technology, Inc., San Jose, CA 95134-1706 (US)
(72) Inventor: MACHLICA, Lukas, 13000 Prague (CZ); NIKOLAEV, Ivan, 12000 Prague (CZ); BRABEC, Jan, 26901 Rakovink (CZ)
(74) Representative: Mathys & Squire
(86) International application number: PCT/US2019/017777
(87) International publication number: WO 2019/164718

(56) References cited:
- US-A1- 2016 036 844
- US-B1- 8 375 450
- MARCO TULIO RIBEIRO ET AL: ""Why Should I Trust You?"", PROCEEDINGS OF THE 22ND ACM SIGKDD INTERNATIONAL CONFERENCE ON KNOWLEDGE DISCOVERY AND DATA MINING, KDD '16, ACM PRESS, NEW YORK, NEW YORK, USA, 13 August 2016 (2016-08-13), pages 1135 - 1144, XP058276906, ISBN: 978-1-4503-4232-2, DOI: 10.1145/2939672.2939778

## Description

### TECHNICAL FIELD

The present disclosure generally relates to supervised learning systems, and more specifically to systems for providing explanations of classification decisions made using supervised learning systems.

### BACKGROUND

Machine learning solutions are known in which supervised learning is used to train a blackbox classifier. One non-limiting example of such a classifier is a decision tree; other examples of black-box classifiers are known in the art. For simplicity of description, and without limiting the generality of the foregoing, the example of a decision tree is often used throughout the present specification.

Once a decision tree has been trained, items for classification are entered into the decision tree and classified. Some solutions for explaining why a decision tree chose to classify a given item in a given way are known in the art.

A technique for explaining the predictions of a classifier is described in Ribeiro et. al, " "Why Should I Trust You?' Explaining the Predictions of Any Classifier", proceedings of the 22nd ACM International Conference on Knowledge Discovery and Data Mining (2016). A system for deriving explanations of causes of network anomalies detected by an intrusion detection system is disclosed in US 2016/0036844. US 8,375,450 describes a decision tree based malware detection system. US 2016/036844 A1 (KOPP MARTIN [CZ] ET AL), 4 February 2016, discloses a method involving receiving an identification of an anomaly associated with a false positive identification of a security threat by an intrusion detection system (IDS). Training sets, comprising identifications of samples of network communications, are created. A decision tree is trained for the anomaly, and a set of features is extracted based on the trained decision tree that distinguishes the anomaly from the samples. US 8 375 450 B1 (OLIVER JONATHAN JAMES [AU] ET AL) discloses a method for training model to detect unknown malwares from known malware families using common substrings, involving constructing decision tree on computer using malware samples that include common substrings.

### BRIEF DESCRIPTION OF THE DRAWINGS

The present disclosure will be understood and appreciated more fully from the following detailed description, taken in conjunction with the drawings in which:
Fig. 1 is a simplified schematic illustration of a decision tree constructed and operative in accordance with an embodiment of the present disclosure;
Fig. 2 is a simplified schematic illustration of another decision tree constructed and operative in accordance with another embodiment of the present disclosure;
Fig. 3 illustrates pseudo code which provides a particularly detailed non-limiting example of how the decision tree of Fig. 2 may be built;
Fig. 4 is a simplified block diagram illustration of an exemplary device suitable for implementing various ones of the systems, methods or processes described herein;
Fig. 5 is a simplified flowchart illustration of a method for training a classifier; and
Fig. 6 is a simplified flowchart illustration of a method for applying a trained classifier.

### OVERVIEW

Aspects of the invention are set out in the independent claims and preferred features are set out in the dependent claims. Features of one aspect may be applied to each aspect alone or in combination with other aspects.

A method includes accessing at least one first data item used to train a classifier; accessing at least one second data item, the second data item not being used to train the classifier; producing a trained classifier based on training using the at least one first data item; storing in the trained classifier, as decision determining information, information of the at least one first data item; and also storing in the trained classifier, in association with the decision determining information, decision explanation information of the at least one second data item.

A method includes accessing a trained classifier, the trained classifier trained based at least on a first data item and including both decision determination information of the first data item and decision explanation information of at least one second data item, the second data item being distinct from the first data item; receiving an item for classification; using the trained classifier to classify the item for classification; and providing item decision information regarding a reason for classifying the item for classification, the item decision information being based on at least a part of the decision explanation information.

A computer-readable storage medium includes stored therein data representing software executable by a computer, the software including instructions including: instructions for accessing at least one first data item used to train a classifier; instructions for accessing at least one second data item, the second data item not being used to train the classifier; instructions for producing a trained classifier based on training using the at least one first data item; instructions for storing in the trained classifier, as decision determining information, information of the at least one first data item; and instructions for also storing in the trained classifier, in association with the decision determining information, decision explanation information of the at least one second data item.

A computer-readable storage medium includes stored therein data representing software executable by a computer, the software including instructions including: instructions for accessing a trained classifier, the trained classifier trained based at least on a first data item and including both decision determination information of the first data item and decision explanation information of at least one second data item, the second data item being distinct from the first data item; instructions for

### DESCRIPTION OF EXAMPLE EMBODIMENTS

As explained above, machine learning solutions are known in which supervised learning is used to train a blackbox classifier such as, by way of non-limiting example, a decision tree. Other non-limiting examples of such classifiers include logistic regression models, neural networks, and random forests. Once a classifier (such as a decision tree) has been trained, items for classification are entered into the trained classifier and are classified. Some solutions for explaining why a classifier chose to classify a given item in a given way are known in the art and are discussed below.

For simplicity of description, and without limiting the generality of the foregoing, the example of a decision tree is often used throughout the present specification. In the case of a decision tree, when items for classification are presented for classification a series of decisions is made at various branches (nodes) of the tree, based on various criteria, until a leaf node of the tree is reached and the item has been classified. Therefore, it is straightforward to provide an explanation of the ultimate classification decision by outputting / stating ("playing back") the decisions made at various branch nodes of the tree. Examples of more general ways of providing an explanation for the decision of a classifier, applicable more widely than a case of a decision tree, are known to persons skilled in the art.

A different problem is presented in some cases. One example of such a case is when the items to be classified comprise encrypted traffic, such as encrypted network traffic. In such a case, the information used to make a decision at various branches of a decision tree may be obscure and difficult to verify as correct. In particular, and without limiting the generality of the foregoing, such information may be obscure and difficult for a human being to understand, such that if a human operator were to query the reason for a given classification (whether directly or via a log file or the like) and the decisions made at various branches were played back (whether directly or into a log file or the like), the "reasoning" behind the classification would still be quite unclear to the human operator. Certain embodiments presented herein are designed to address these problems, and to provide better explanations of classification decisions.

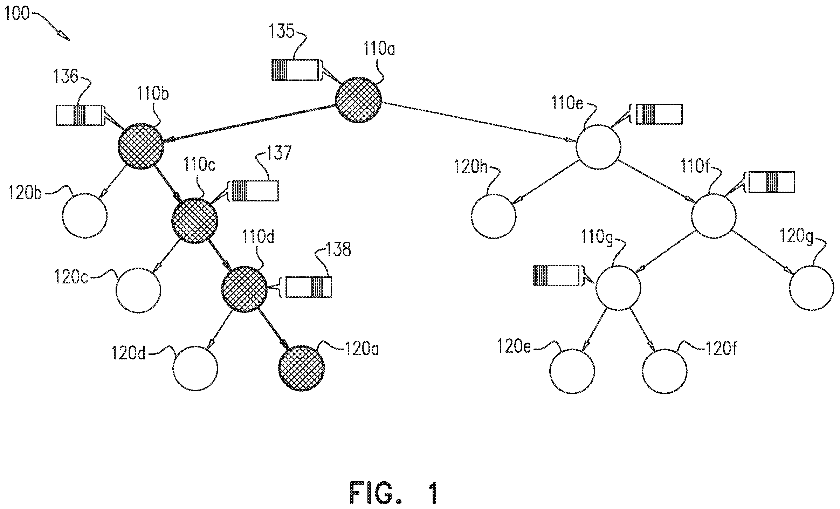

Reference is now made to Fig. 1, which is a simplified schematic illustration of a decision tree constructed and operative in accordance with an embodiment of the present disclosure. In Fig. 1 a decision tree 100 is shown. The decision tree 100 comprises a plurality, generally a multiplicity, of branch nodes 110 which include branch nodes 110a - 110g, and also comprises leaf nodes 120 which include leaf nodes 120a - 120h. For simplicity of depiction, a limited number of branch nodes 110 and leaf nodes 120 is depicted in Fig. 1, it being appreciated that in practice a larger number of such nodes may be comprised in the decision tree 100.

The decision tree 100 of Fig. 1 is generally created by a training process. Each depicted branch node 110 represents a decision regarding an item to be classified, based on associated decision information; for example, in Fig. 1 decision determination information 135 is associated with root node 110a of the decision tree 100. In a training process, known items conceptually enter the tree at the root node 110a and are classified by passing through branch nodes 110 until reaching a leaf node 120. If, for example, for a plurality of known items which are either known to be "good" or known to be "bad", the decision tree 100 can be determined to be successful or unsuccessful according to how well it succeeds in classifying known-good items as good, and known-bad items as bad.

One non-limiting example of a training process suitable for training the decision tree 100 of Fig. 1 is referred to herein as the "regular Random Forest algorithm". In the regular Random Forest algorithm, a decision tree such as the decision tree 100 of Fig. 1 is trained automatically using a training set comprising exemplar data. At each branch node 110 a split function is defined in such a way as to optimize the split function so that the data is split as best as possible; "best" being defined in a particular way given the particular task to be performed when using the decision tree. For a tree like the decision tree 100 of Fig. 1, "best" could mean that the child nodes of each branch node 110 are as "pure" as possible, so that each child node would in practice receive as many items which are similar to each other as possible, and as few different items as possible. In addition, the training process is generally constrained to produce a decision tree having, for example, one or more of the following: a maximum number of levels; a determined level of "purity" as described above; and no less than a minimum number of items at each leaf node 120.

Once a decision tree such as decision tree 100 of Fig. 1 has been trained, the decision tree 100 is used to classify "unknown" items (continuing the above example, items for which it is not known whether the items are "good" or "bad"). When an item to be classified (also termed herein an "item for classification") is received, the item for classification (not shown) conceptually enters the tree at the root node 110a. At the root node 110a decision determination information 135 is used to begin classifying the item for classification. In the example of Fig. 1, based on the decision determination information 135 associated with the root node 110a, the item for classification is passed on to node 110b.

Similarly, the item for classification continues to pass through the decision tree at nodes 110c and 110d. At nodes 110a, 110b, 110c, and 110d a test based on associated determination information 135, 136, 137, and 138, respectively, is used to send the item for classification on to a further node; for simplicity of depiction, only a portion of the determination information has been assigned reference numerals in Fig. 1. For example, at node 110b the item for classification is examined based on the determination information 136 associated with node 110b. For example, the determination information might comprise "if size of item for classification exceeds 1056 bytes proceed to node 110c; else proceed to node 120b". In the particular example shown in Fig. 1, the item for classification is sent on to node 110c, and not to node 120b, because the size of the item for classification exceeds 1056 bytes.

When the item for classification reaches a leaf node 120, the item for classification has been classified. In the example of Fig. 1, the item reaches leaf node 120a and is classified accordingly; that is, the item for classification is classified according to a classification associated with leaf node 120a. For example, if leaf node 120a is associated with the classification "suspected dangerous malware", then the item for classification may be classified at leaf node 120a as "suspected dangerous malware". For ease of depiction, the nodes 110a, 110b, 110c, 110d, and 120a which were "visited" by the item for classification are shown with hashing.

If it is desired to provide an explanation of the "reasoning" behind the classification (whether to a human operator, to a log file, or otherwise), the "reasoning" may comprise the decisions made at nodes 110a, 110b, 110c, and 110d, based in each such case on associated determination information 135, 136, 137, and 138 respectively. In the particular example discussed, the "reasoning" will comprise "size of item exceeds 1056 bytes", per the decision made at node 122 based on the determination information 136 associated with node 122; the "reasoning" will also comprise information per the decisions made at nodes 110a, 110c, and 110d, based on determination information 135, 137, and 138, respectively.

As described above, there may be cases in which the "reasoning" provided by a decision tree such as the decision tree 100 of Fig. 1 is inadequate. One example of such a case is when the items to be classified comprise encrypted traffic, such as, by way of non-limiting example, encrypted network traffic. In such a case, the information used to make a decision at each such branch of a decision tree may be obscure and difficult for a human being to understand, such that if a human operator were to query the reason for a given classification and, in order to provide such a reason, the decisions made at each such branch were played back, the "reasoning" behind the classification would still be quite unclear to the human operator. For example, as described above the "reasoning" may comprise "size of item exceeds 1056 bytes"; it may not be apparent to a human operator why "size of item exceeds 1056 bytes" is part of the reasoning for classifying an item as suspected dangerous malware.

It will be appreciated that one of the challenges in providing "reasoning" which would be clear to a human operator is that, during use of a decision tree such as the decision tree 100 to classify items, the determination information 135, 136, 137, and 138 relates to characteristics of an item for classification which were used to train the decision tree 100 and which are readily known at the time of classification of the item for classification. For example, during a training phase of the decision tree 100, as described above, an item for classification may have been determined to be suspected dangerous malware by being executed in a controlled environment, such as a sandbox, and it may have been determined that many items which are suspected dangerous malware have a size of item exceeding 1056 bytes, thus leading to the determination information 136. However, in the training phase of the decision tree 100 the decision tree 100 was trained based on information (such as the determination information 135, 136, 137, and 138) which would be readily known at the later time of classification of an item; an item to be classified is not executed in a sandbox when it is to be classified, and hence the results of execution in a sandbox, which execution may have taken place at the time of training the decision tree 100, are not included in the determination information 135, 136, 137, and 138.

Data sources from a sandboxing environment are used to show Indicators of Compromise (IOCs) associated with the classified behavior. Examples of such IOCs, based on behavior during execution in a sandbox, include by way of non-limiting example: accessing the Windows registry or certain sensitive portions thereof; or modifying or attempting to modify an executable file; executing portions of memory in a way which is deemed suspicious; creating or attempting to create a DLL file; and so forth.

It is appreciated that execution in a sandbox, as described above, is provided as the mechanism for determining one or more characteristics known at the time of training but not readily known regarding an item for classification, or difficult to determine regarding an item for classification, when an item for classification is to be classified; for example, execution in a sandbox would be expected to be difficult and / or time-consuming to carry out when an item for classification is to be classified. Other examples of such characteristics which are difficult to determine when an item for classification is to be classified include, but are not limited to, information from proxy logs captured on the training data or features that are easy to understand but are expensive to calculate in a "live" environment when the trained decision tree 100 is used to classify an item to be classified. Characteristics which would be expected to be difficult and / or time-consuming to carry out when an item for classification is to be classified are also termed herein "inappropriate to use in real time".

Proxy logs created when a proxy is used to connect to a site can, for example, provide information about Uniform Resource Locators (URLs), user agent/s, referrer/s and similar information. In general, log entries in proxy logs reveal information about the client making the request, date / time of the request, and the name of an object or objects requested. It is appreciated that the log entry information listed is a non-limiting example of log entry information that might be found in a proxy log.

Examples of expensive features as referred to above may include, by way of non-limiting example:
information extracted from external data feeds, such as a query to VirusTotal (a product / site available via the World Wide Web which includes information aggregated from malware vendors; accessing VirusTotal requires an application programming interface (API) key, would require significant resource use, and would thus be inappropriate to use in real time);
information extracted from a whois database; and
features calculated from large amounts of data during the training; such features might include additional status information, a number of users who visited a particular domain, etc.; such information changes quickly and takes a long time to determine, and thus would be inappropriate to use in real time.

Thus, in a very particular example, it could be possible and might be desirable for "reasoning" to not simply be "this particular behavior is malicious", or "this particular behavior is malicious because of excessive up-packets in the 83rd percentile of the distribution in combination with irregular access timings". The "reasoning" could specifically point out the malicious behavior and a list of associated informative IOCs such as modifying the registry, sending a number of emails which exceeds a particular limit, and accessing domains that have a lot of hits on VirusTotal, as explained above.

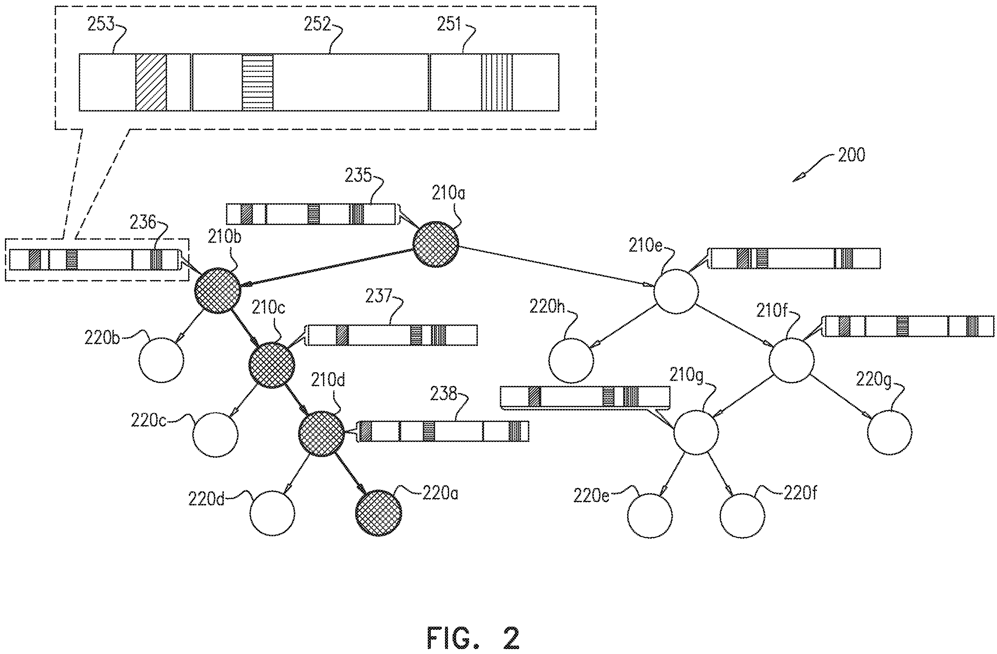

Reference is now made to Fig. 2, which is a simplified schematic illustration of another decision tree constructed and operative in accordance with another embodiment of the present disclosure. In Fig. 2 a decision tree 200 is shown. The decision tree 200 comprises a plurality, generally a multiplicity, of branch nodes 210 which include branch nodes 210a - 210 g, and also comprises leaf nodes 220 which include leaf nodes 220a - 220h. For simplicity of depiction, a limited number of branch nodes 210 and leaf nodes 220 is depicted in Fig. 2, it being appreciated that in practice a larger number of such nodes may be comprised in the decision tree 200.

The decision tree 200 may be created by a training process which differs from the training process described above for the decision tree 100 of Fig. 1. In particular, as a result of the training process (a particularly detailed non-limiting example of which is described below) determination information comprised in the decision tree 200 includes, as described in more detail above and below, both information readily available at a time when an item for classification is to be classified (that information being used for training the decision tree 200), and also other information which is available when training the decision tree 200 but which is not readily available at the time when an item for classification is to be classified by the already-trained decision tree 200.

Once a decision tree such as the decision tree 200 of Fig. 2 has been trained, the decision tree 200 is used to classify "unknown" items. When an item to be classified ("item for classification") is received, the item for classification (not shown) conceptually enters the tree at the root node 210a. At the root node 210a decision determination information 235 is used to begin classifying the item for classification. In the example of Fig. 2, based on the decision determination information 235 associated with the root node 210a, the item for classification is passed on to node 210b.

Similarly, the item for classification continues to pass through the decision tree at nodes 210c and 210d. At nodes 210a, 210b, 210c, and 210d a test based on associated determination information 235, 236, 237, and 238, respectively, is used to send the item for classification on to a further node. For example, at node 210b the item for classification is examined based on the determination information 236 associated with node 210b.

In the decision tree 200, determination information such as the determination information 236 may comprise, as explained above, both information available at a time when an item for classification is to be classified, and other information which is available at a time of training but which other information is not readily available at the time when an item for classification is to be classified. For example, the determination information 236 may comprise available determination information 251, which is actually used for classifying an item to be classified, as well as non-available determination information 252 and 253, which are information that was available at a time of training but relate to one or more characteristics typical of items for classification, but which are not readily known / not readily available regarding particular item for classification at the time when the item for classification is to be classified.

For example, the determination information might comprise available determination information 251 indicating "if size of item for classification exceeds 1056 bytes proceed to node 210c; else proceed to node 220b". In the particular example shown in Fig. 2, the item for classification is sent on to node 210c, and not to node 220b, because the size of the item for classification exceeds 1056 bytes.

When the item for classification reaches a leaf node 220, the item for classification has been classified. In the example of Fig. 1, the item reaches leaf node 220a and is classified accordingly; that is, the item for classification is classified according to a classification associated with leaf node 220a. For example, if leaf node 220a is associated with the classification "suspected dangerous malware", then the item for classification may be classified at leaf node 220a as "suspected dangerous malware". For ease of depiction, the nodes 210a, 210b, 210c, 210d, and 220a which were "visited" by the item for classification are shown with hashing.

If it is desired to provide an explanation of the "reasoning" behind the classification (whether to a human operator, to a log file, or otherwise), the "reasoning" may comprise the decisions made at nodes 210a, 210b, 210c, and 210d, based at the respective nodes on associated determination information 235, 236, 237, and 238 respectively. In the particular example discussed, the "reasoning" will comprise "size of item exceeds 1056 bytes", per the decision made at node 210b based on the determination information 236 associated with node 210b; the "reasoning" will also comprise information per the decisions made at nodes 210a, 210c, and 210d, based on determination information 235, 236, 237, and 238, respectively. In addition, the "reasoning" may comprise non-available determination information 252 and / or 253, which, as indicated above, are information that was available at a time of training but relate to one or more characteristics which are not readily known / not readily available at the time when the item for classification is to be classified. For example, the non-available determination information 252 may comprise "execution in a controlled environment suggests malware".

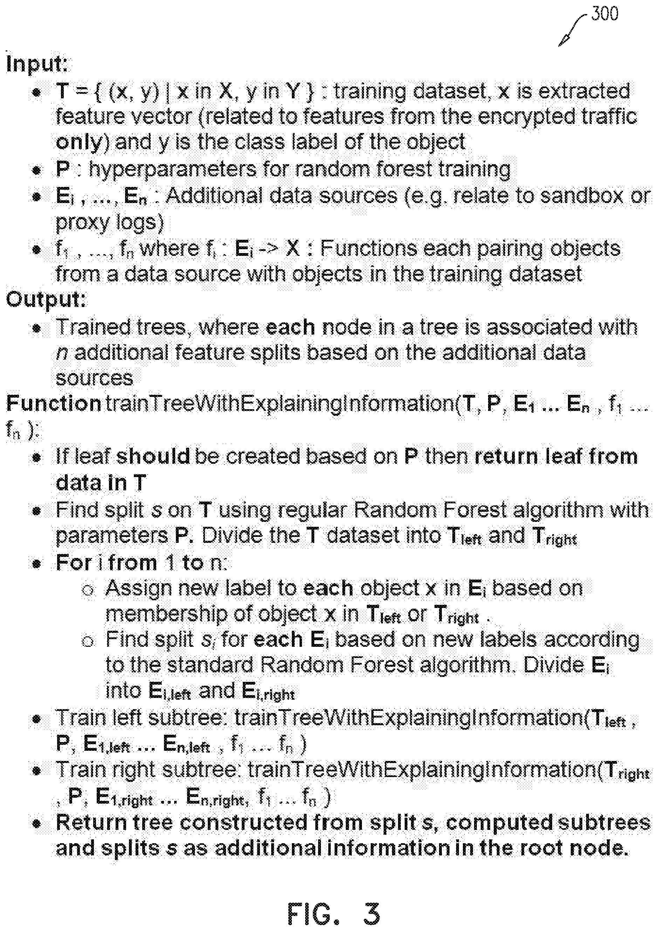

Reference is now made to Fig. 3, which illustrates pseudo code 300 which provides the example of how the decision tree of Fig. 2 is built. In the pseudo code of Fig. 3:
a) pairing between data sources is implicit in the input functions f₁ , ..., fₙ. In one example described above, where a sandbox is used, network behavior of a particular piece of code is known based on behavior of the piece of code when executed in a sandbox. In another example, where VirusTotal is used, information extracted from VirusTotal (based, for example, on a particular domain) may be used.
b) the reference to "regular Random Forest algorithm", refers to the regular Random Forest algorithm described above.

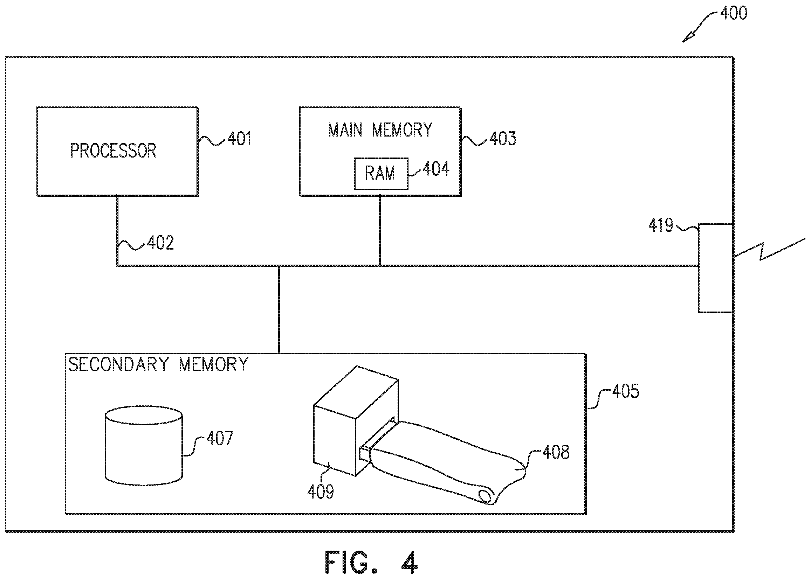

Reference is now made to Fig. 4, which is a simplified block diagram illustration of an exemplary device 400 suitable for implementing various ones of the systems, methods or processes described above.

The exemplary device 400 comprises one or more processors, such as processor 401, providing an execution platform for executing machine readable instructions such as software. One of the processors, such as by way of non-limiting example the illustrated processor 401, may be a special purpose processor operative to perform the methods for building a tree and/or the methods for classifying items described herein above. Processor 401 comprises dedicated hardware logic circuits, in the form of an application-specific integrated circuit (ASIC), field programmable gate array (FPGA), or full-custom integrated circuit, or a combination of such devices. Alternatively or additionally, some or all of the functions of the processor 401 may be carried out by a programmable processor microprocessor or digital signal processor (DSP), under the control of suitable software. This software may be downloaded to the processor in electronic form, over a network, for example. Alternatively or additionally, the software may be stored on tangible storage media, such as optical, magnetic, or electronic memory media.

Commands and data from the processor 401 are communicated over a communication bus 402. The system 400 also includes a main memory 403, such as a Random Access Memory (RAM) 404, where machine readable instructions may reside during runtime, and further includes a secondary memory 405. The secondary memory 405 includes, for example, a hard disk drive 407 and/or a removable storage drive 408, representing a floppy diskette drive, a magnetic tape drive, a compact disk drive, a flash drive, etc., or a nonvolatile memory where a copy of the machine readable instructions or software may be stored. The secondary memory 405 may also include ROM (read only memory), EPROM (erasable, programmable ROM), EEPROM (electrically erasable, programmable ROM). In addition to software, data representing the decision tree 200 of Fig. discussed above, without limiting the generality of the foregoing, or other similar data, may be stored in the main memory 403 and/or the secondary memory 405. The removable storage drive 408 is read from and/or written to by a removable storage control unit 409 in a well-known manner.

A network interface 419 is provided for communicating with other systems and devices via a network. The network interface 419 typically includes a wireless interface for communicating with wireless devices in the wireless community. A wired network interface (e.g. an Ethernet interface) may be present as well. The exemplary device 400 may also comprise other interfaces, including, but not limited to Bluetooth, and HDMI. It is appreciated that logic and/or software may, in addition to what is described above and below, be stored other than in the main memory 403 and/or the secondary memory 405; without limiting the generality of the foregoing, logic and/or software may be stored in a cloud and/or on a network and may be accessed through the network interface 419 and executed by the processor 401.

It will be apparent to one of ordinary skill in the art that one or more of the components of the exemplary device 400 may not be included and/or other components may be added as is known in the art. The exemplary device 400 shown in Fig. 4 is provided as an example of a possible platform that may be used; other types of platforms may be used as is known in the art. One or more of the steps described above and/or below may be implemented as instructions embedded on a computer readable medium and executed on the exemplary device 400. The steps may be embodied by a computer program, which may exist in a variety of forms both active and inactive. For example, they may exist as software program(s) comprised of program instructions in source code, object code, executable code or other formats for performing some of the steps. Any of the above may be embodied on a computer readable medium, which include storage devices and signals, in compressed or uncompressed form. Examples of suitable computer readable storage devices include conventional computer system RAM (random access memory), ROM (read only memory), EPROM (erasable, programmable ROM ), EEPROM (electrically erasable, programmable ROM), and magnetic or optical disks or tapes. Examples of computer readable signals, whether modulated using a carrier or not, are signals that a computer system hosting or running a computer program may be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general. It is therefore to be understood that those functions enumerated above may be performed by any electronic device capable of executing the above-described functions.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product or on a tangible medium. In some cases, it may be possible to instantiate the software components as a signal interpretable by an appropriate computer, although such an instantiation may be excluded in certain embodiments of the present invention.

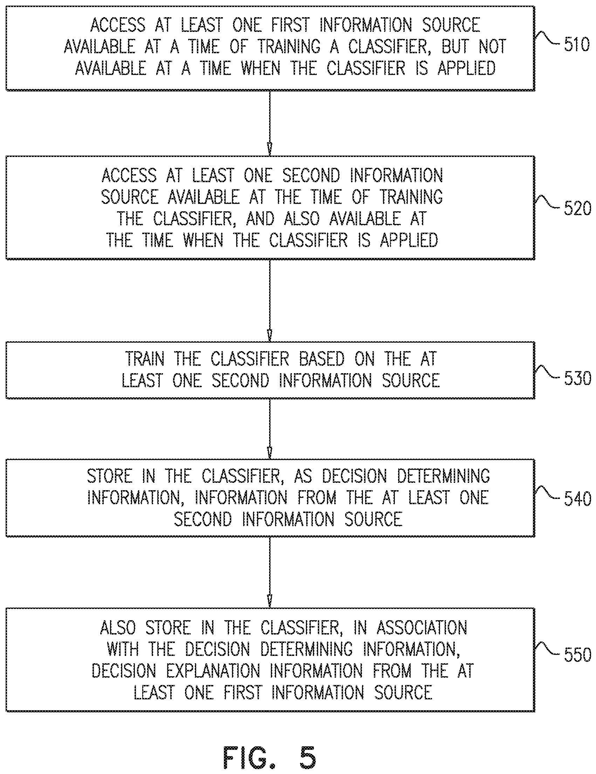

Reference is now made to Fig. 5, which is a simplified flowchart illustration of an exemplary method for training a classifier. In the method of Fig. 5, at least one first information source available when a classifier is trained, but not readily available at a time when the classifier is applied, is accessed at step 510. At step 520, at least one second information source is accessed, the second information source being available at the time of training the classifier and also being readily available when the classifier is applied. The classifier is trained based on the at least one second information source at step 530, and decision determining information from the at least one second information source is stored in the classifier at step 540. In addition to the decision determining information, decision explanation information from the at least one first information source is stored in the classifier at step 550.

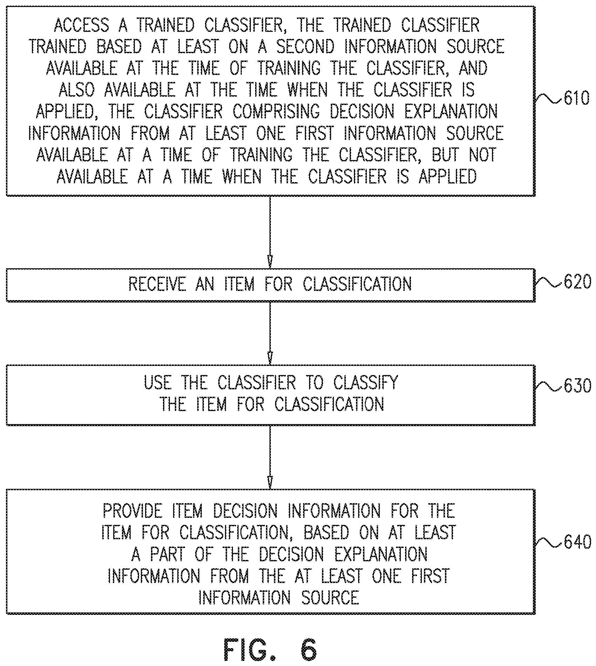

Reference is now made to Fig. 6, which is a simplified flowchart illustration of a method for applying a trained classifier. In step 610, a trained classifier is accessed. The trained classifier is a classifier trained based at least on a second information source available when the classifier is trained, and also readily available when the classifier is applied. The trained classifier also includes decision explanation information from at least one first information source which is available when the classifier is trained, but which is not readily available when the classifier is applied. An item to be classified is received at step 620, and the classifier is used to classify the item at step 630. At step 640, item decision information for the item is provided; the item decision information is based on at least a part of the decision information from the at least one first information source.

The methods of Figs. 5 and 6 are believed to be self-explanatory with reference to the above discussion, and in particular with reference to the above discussion of Figs. 2 and 3.

In summary, in one embodiment, a method includes accessing a trained classifier, the trained classifier trained based at least on a first data item and including both decision determination information of the first data item and decision explanation information of at least one second data item, the second data item being distinct from the first data item; receiving an item for classification; using the trained classifier to classify the item for classification; and providing item decision information regarding a reason for classifying the item for classification, the item decision information being based on at least a part of the decision explanation information. Other embodiments are also described.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined by the appended claims.

## Claims

1. A system comprising a processor; and a memory to store data used by the processor, wherein the processor is operative to:
access first data items used to train a classifier for classifying encrypted network traffic in relation to suspected dangerous malware;
access second data items, the second data items being distinct from the first data items and not used to perform classification using the classifier;
produce the trained classifier based on training using the first data items, the classifier comprising a decision tree (200) having branch nodes (210a-210g) and leaf nodes (220a-220h) and wherein the classifier is trained using a Random Forest algorithm comprising defining, at each branch node, a split function for splitting the first data items;
store in the trained classifier, as decision determining information (251) at branch nodes of the decision tree, information of the first data items; and
also store in the trained classifier at branch nodes of the decision tree, in association with the decision determining information, decision explanation information (252, 253) of the second data items, the decision explanation information comprising an indicator of compromise, IOC, determined based on behavior of data items deemed as suspicious when executed in a sandbox environment at a time of training the classifier but wherein the IOC is not available at a time of classification for an item to be classified;
wherein storing the decision explanation information comprises, for each branch node of the trained classifier:
assigning a label to each data item executed in the sandbox environment based on the split function for the branch node as applied to one of the first data items that is paired with the respective data item executed in the sandbox environment;
determining a split function for the data items executed in the sandbox environment based on the assigned labels; and
storing, in the trained classifier, decision explanation information at the branch node based on the determined split function for the data items executed in the sandbox environment.

2. The system according to claim 1 and wherein the processor is also operative to:
use the trained classifier to classify an item;
provide information from the trained classifier regarding a reason for classifying the item, the information including the decision explanation information.

3. A system comprising a processor; and a memory to store data used by the processor, wherein the processor is operative to:
access a trained classifier for classifying encrypted network traffic in relation to suspected dangerous malware, the trained classifier comprising a decision tree (200) having branch nodes (210a-210g) and leaf nodes (220a-220h) and trained based at least on first data items and using a Random Forest algorithm comprising defining, at each branch node, a split function for splitting the first data items, the decision tree including, at branch nodes, both decision determination information (251) of the first data items and decision explanation information (252, 253) of second data items, the second data items being distinct from the first data items and not used to perform classification using the classifier, wherein the decision explanation information comprises an indicator of compromise, IOC, determined based on behavior of data items deemed as suspicious when executed in a sandbox environment at a time of training the classifier but wherein the IOC is not available at a time of classification for an item to be classified;
receive an encrypted data item for classification;
use the trained classifier to classify the encrypted data item; and
provide item decision information regarding a reason for classifying the item for classification, the item decision information being based on at least a part of the decision explanation information;
wherein the decision explanation information is stored at the branch nodes of the trained classifier by, for each branch node:
assigning a label to each data item executed in the sandbox environment based on the split function for the branch node as applied to one of the first data items that is paired with the respective data item executed in the sandbox environment;
determining a split function for the data items executed in the sandbox environment based on the assigned labels; and
storing, in the trained classifier, decision explanation information at the branch node based on the determined split function for the data items executed in the sandbox environment.

4. The system according to any preceding claim and wherein the classifier comprises a plurality of decision trees.

5. The system according to claim 1, wherein the IOC indicates one of:
accessing the Windows registry or certain sensitive portions thereof;
modifying or attempting to modify an executable file;
executing portions of memory in a way which is deemed suspicious;
creating or attempting to create a DLL file.

6. A computer-implemented method comprising performing by a processor:
accessing first data items used to train a classifier for classifying encrypted network traffic in relation to suspected dangerous malware;
accessing second data items, the second data items being distinct from the first data items and not used to perform classification using the classifier;
producing the trained classifier based on training using the first data items, the classifier comprising a decision tree (200) having branch nodes (210a-210g) and leaf nodes (220a-220h) and wherein the classifier is trained using a Random Forest algorithm comprising defining, at each branch node, a split function for splitting the first data items;
storing in the trained classifier, as decision determining information (251) at branch nodes of the decision tree, information of the first data items; and
also storing in the trained classifier at branch nodes of the decision tree, in association with the decision determining information, decision explanation information (252, 253) of the second data items, the decision explanation information comprising an indicator of compromise, IOC, determined based on behavior of data items deemed as suspicious when executed in a sandbox environment at a time of training the classifier but wherein the IOC is not available at a time of classification for an item to be classified;
wherein storing the decision explanation information comprises, for each branch node of the trained classifier:
assigning a label to each data item executed in the sandbox environment based on the split function for the branch node as applied to one of the first data items that is paired with the respective data item executed in the sandbox environment;
determining a split function for the data items executed in the sandbox environment based on the assigned labels; and
storing, in the trained classifier, decision explanation information at the branch node based on the determined split function for the data items executed in the sandbox environment.

7. A computer-implemented method comprising performing by a processor:
accessing a trained classifier for classifying encrypted network traffic in relation to suspected dangerous malware, the trained classifier comprising a decision tree (200) having branch nodes (210a-210g) and leaf nodes (220a-220h) and trained based at least on first data items and using a Random Forest algorithm comprising defining, at each branch node, a split function for splitting the first data items, the decision tree including, at branch nodes, both decision determination information (251) of the first data items and decision explanation information (252, 253) of second data items, the second data items being distinct from the first data items and not used to perform classification using the classifier, wherein the decision explanation information comprises an indicator of compromise, IOC, determined based on behavior of data items deemed as suspicious when executed in a sandbox environment at a time of training the classifier but wherein the IOC is not available at a time of classification for an item to be classified;
receiving an encrypted data item for classification;
using the trained classifier to classify the encrypted data item; and
providing item decision information regarding a reason for classifying the item for classification, the item decision information being based on at least a part of the decision explanation information;
wherein the decision explanation information is stored at the branch nodes of the trained classifier by, for each branch node:
assigning a label to each data item executed in the sandbox environment based on the split function for the branch node as applied to one of the first data items that is paired with the respective data item executed in the sandbox environment;
determining a split function for the data items executed in the sandbox environment based on the assigned labels; and
storing, in the trained classifier, decision explanation information at the branch node based on the determined split function for the data items executed in the sandbox environment.

8. A computer program, computer program product or logic encoded on a tangible computer readable medium, the computer program, computer program product or logic comprising instructions which, when executed by a processor, are adapted to cause the processor to perform the method according to any one of claims 6 or 7.

## Patentansprüche

1. System, umfassend einen Prozessor und einen Speicher, um von dem Prozessor verwendete Daten zu speichern, wobei der Prozessor betriebsfähig ist zum:
Zugreifen auf erste Datenelemente, die dazu verwendet werden, einen Klassifikator zum Klassifizieren von verschlüsseltem Netzwerkverkehr in Bezug auf vermutete gefährliche Malware zu schulen;
Zugreifen auf zweite Datenelemente, wobei die zweiten Datenelemente sich von den ersten Datenelementen unterscheiden und nicht dazu verwendet werden, eine Klassifizierung unter Verwendung des Klassifikators durchzuführen;
Produzieren des geschulten Klassifikators auf der Basis einer Schulung unter Verwendung der ersten Datenelemente, wobei der Klassifikator einen Entscheidungsbaum (200) mit Astknoten (210a-210g) und Blattknoten (220a-220h) umfasst und wobei der Klassifikator unter Verwendung eines Random-Forest-Algorithmus geschult wird, der ein Definieren einer Aufteilungsfunktion zum Aufteilen der ersten Datenelemente an jedem Astknoten umfasst;
Speichern von Informationen der ersten Datenelemente in dem geschulten Klassifikator als Entscheidungsbestimmungsinformationen (251) an Astknoten des Entscheidungsbaums; und
außerdem Speichern von Entscheidungserklärungsinformationen (252, 253) der zweiten Datenelemente in dem geschulten Klassifikator an Astknoten des Entscheidungsbaums in Assoziation mit den Entscheidungsbestimmungsinformationen, wobei die Entscheidungserklärungsinformationen einen Kompromissindikator, IOC, umfassen, der auf der Basis eines Verhaltens von Datenelementen, das als verdächtig erachtet wird, bei Ausführung in einer Sandbox-Umgebung zu einer Zeit einer Schulung des Klassifikators bestimmt wird, wobei der IOC jedoch nicht zu einer Zeit einer Klassifizierung für ein zu klassifizierendes Element zur Verfügung steht;
wobei das Speichern der Entscheidungserklärungsinformationen für jeden Astknoten des geschulten Klassifikators umfasst:
Zuordnen eines Etiketts zu jedem Datenelement, das in der Sandbox-Umgebung ausgeführt wird, auf der Basis der Aufteilungsfunktion für den Astknoten, wie auf eines der ersten Datenelemente angewendet, das mit dem jeweiligen Datenelement gepaart ist, das in der Sandbox-Umgebung ausgeführt wird;
Bestimmen einer Aufteilungsfunktion für die Datenelemente, die in der Sandbox-Umgebung ausgeführt werden, auf der Basis der zugeordneten Etiketten; und
Speichern von Entscheidungserklärungsinformationen in dem geschulten Klassifikator an dem Astknoten auf der Basis der bestimmten Aufteilungsfunktion für die Datenelemente, die in der Sandbox-Umgebung ausgeführt werden.

2. System nach Anspruch 1 und wobei der Prozessor außerdem betriebsfähig ist zum:
Verwenden des geschulten Klassifikators zum Klassifizieren eines Elements;
Bereitstellen von Informationen aus dem geschulten Klassifikator bezüglich eines Grunds zum Klassifizieren des Elements, wobei die Informationen die Entscheidungserklärungsinformationen einschließen.

3. System, umfassend einen Prozessor und einen Speicher, um von dem Prozessor verwendete Daten zu speichern, wobei der Prozessor betriebsfähig ist zum:
Zugreifen auf einen geschulten Klassifikator zum Klassifizieren von verschlüsseltem Netzwerkverkehr in Bezug auf vermutete gefährliche Malware, wobei der geschulte Klassifikator einen Entscheidungsbaum (200) mit Astknoten (210a-210g) und Blattknoten (220a-220h) umfasst und auf der Basis von mindestens ersten Datenelementen und unter Verwendung eines Random-Forest-Algorithmus geschult ist, der ein Definieren einer Aufteilungsfunktion zum Aufteilen der ersten Datenelemente an jedem Astknoten umfasst, wobei der Entscheidungsbaum sowohl Entscheidungsbestimmungsinformationen (251) der ersten Datenelemente als auch Entscheidungserklärungsinformationen (252, 253) von zweiten Datenelementen an Astknoten einschließt, wobei die zweiten Datenelemente sich von den ersten Datenelementen unterscheiden und nicht dazu verwendet werden, eine Klassifizierung unter Verwendung des Klassifikators durchzuführen, wobei die Entscheidungserklärungsinformationen einen Kompromissindikator, IOC, umfassen, der auf der Basis eines Verhaltens von Datenelementen, das als verdächtig erachtet wird, bei Ausführung in einer Sandbox-Umgebung zu einer Zeit einer Schulung des Klassifikators bestimmt wird, wobei der IOC jedoch nicht zu einer Zeit einer Klassifizierung für ein zu klassifizierendes Element zur Verfügung steht;
Empfangen eines verschlüsselten Datenelements zur Klassifizieren;
Verwenden des geschulten Klassifikators zum Klassifizieren des verschlüsselten Datenelements; und
Bereitstellen von Elemententscheidungsinformationen bezüglich eines Grunds zum Klassifizieren des Elements zur Klassifizierung, wobei die Elemententscheidungsinformationen zumindest zum Teil auf den Entscheidungserklärungsinformationen basieren;
wobei die Entscheidungserklärungsinformationen an den Astknoten des geschulten Klassifikators für jeden Astknoten gespeichert werden durch:
Zuordnen eines Etiketts zu jedem Datenelement, das in der Sandbox-Umgebung ausgeführt wird, auf der Basis der Aufteilungsfunktion für den Astknoten, wie auf eines der ersten Datenelemente angewendet, das mit dem jeweiligen Datenelement gepaart ist, das in der Sandbox-Umgebung ausgeführt wird;
Bestimmen einer Aufteilungsfunktion für die Datenelemente, die in der Sandbox-Umgebung ausgeführt werden, auf der Basis der zugeordneten Etiketten; und
Speichern von Entscheidungserklärungsinformationen in dem geschulten Klassifikator an dem Astknoten auf der Basis der bestimmten Aufteilungsfunktion für die Datenelemente, die in der Sandbox-Umgebung ausgeführt werden.

4. System nach einem vorhergehenden Anspruch und wobei der Klassifikator eine Vielzahl von Entscheidungsbäumen umfasst.

5. System nach Anspruch 1, wobei der IOC eines der folgenden angibt:
Zugreifen auf die Windows-Registrierungsdatenbank oder bestimmte empfindliche Teile davon;
Modifizieren oder Versuchen eines Modifizierens einer ausführbaren Datei;
Ausführen von Teilen eines Speichers auf eine Weise, die als verdächtig erachtet wird;
Erzeugen oder Versuchen eines Erzeugens einer DLL-Datei.

6. Computerimplementiertes Verfahren, umfassend ein Durchführen des folgenden durch einen Prozessor:
Zugreifen auf erste Datenelemente, die dazu verwendet werden, einen Klassifikator zum Klassifizieren von verschlüsseltem Netzwerkverkehr in Bezug auf vermutete gefährliche Malware zu schulen;
Zugreifen auf zweite Datenelemente, wobei die zweiten Datenelemente sich von den ersten Datenelementen unterscheiden und nicht dazu verwendet werden, eine Klassifizierung unter Verwendung des Klassifikators durchzuführen;
Produzieren des geschulten Klassifikators auf der Basis einer Schulung unter Verwendung der ersten Datenelemente, wobei der Klassifikator einen Entscheidungsbaum (200) mit Astknoten (210a-210g) und Blattknoten (220a-220h) umfasst und wobei der Klassifikator unter Verwendung eines Random-Forest-Algorithmus geschult wird, der ein Definieren einer Aufteilungsfunktion zum Aufteilen der ersten Datenelemente an jedem Astknoten umfasst;
Speichern von Informationen der ersten Datenelemente in dem geschulten Klassifikator als Entscheidungsbestimmungsinformationen (251) an Astknoten des Entscheidungsbaums; und
außerdem Speichern von Entscheidungserklärungsinformationen (252, 253) der zweiten Datenelemente in dem geschulten Klassifikator an Astknoten des Entscheidungsbaums in Assoziation mit den Entscheidungsbestimmungsinformationen, wobei die Entscheidungserklärungsinformationen einen Kompromissindikator, IOC, umfassen, der auf der Basis eines Verhaltens von Datenelementen, das als verdächtig erachtet wird, bei Ausführung in einer Sandbox-Umgebung zu einer Zeit einer Schulung des Klassifikators bestimmt wird, wobei der IOC jedoch nicht zu einer Zeit einer Klassifizierung für ein zu klassifizierendes Element zur Verfügung steht;
wobei das Speichern der Entscheidungserklärungsinformationen für jeden Astknoten des geschulten Klassifikators umfasst:
Zuordnen eines Etiketts zu jedem Datenelement, das in der Sandbox-Umgebung ausgeführt wird, auf der Basis der Aufteilungsfunktion für den Astknoten, wie auf eines der ersten Datenelemente angewendet, das mit dem jeweiligen Datenelement gepaart ist, das in der Sandbox-Umgebung ausgeführt wird;
Bestimmen einer Aufteilungsfunktion für die Datenelemente, die in der Sandbox-Umgebung ausgeführt werden, auf der Basis der zugeordneten Etiketten und
Speichern von Entscheidungserklärungsinformationen in dem geschulten Klassifikator an dem Astknoten auf der Basis der bestimmten Aufteilungsfunktion für die Datenelemente, die in der Sandbox-Umgebung ausgeführt werden.

7. Computerimplementiertes Verfahren, umfassend ein Durchführen des folgenden durch einen Prozessor:
Zugreifen auf einen geschulten Klassifikator zum Klassifizieren von verschlüsseltem Netzwerkverkehr in Bezug auf vermutete gefährliche Malware, wobei der geschulte Klassifikator einen Entscheidungsbaum (200) mit Astknoten (210a-210g) und Blattknoten (220a-220h) umfasst und auf der Basis von mindestens ersten Datenelementen und unter Verwendung eines Random-Forest-Algorithmus geschult ist, der ein Definieren einer Aufteilungsfunktion zum Aufteilen der ersten Datenelemente an jedem Astknoten umfasst, wobei der Entscheidungsbaum sowohl Entscheidungsbestimmungsinformationen (251) der ersten Datenelemente als auch Entscheidungserklärungsinformationen (252, 253) von zweiten Datenelementen an Astknoten einschließt, wobei die zweiten Datenelemente sich von den ersten Datenelementen unterscheiden und nicht dazu verwendet werden, eine Klassifizierung unter Verwendung des Klassifikators durchzuführen, wobei die Entscheidungserklärungsinformationen einen Kompromissindikator, IOC, umfassen, der auf der Basis eines Verhaltens von Datenelementen, das als verdächtig erachtet wird, bei Ausführung in einer Sandbox-Umgebung zu einer Zeit einer Schulung des Klassifikators bestimmt wird, wobei der IOC jedoch nicht zu einer Zeit einer Klassifizierung für ein zu klassifizierendes Element zur Verfügung steht;
Empfangen eines verschlüsselten Datenelements zur Klassifizieren;
Verwenden des geschulten Klassifikators zum Klassifizieren des verschlüsselten Datenelements; und
Bereitstellen von Elemententscheidungsinformationen bezüglich eines Grunds zum Klassifizieren des Elements zur Klassifizierung, wobei die Elemententscheidungsinformationen zumindest zum Teil auf den Entscheidungserklärungsinformationen basieren;
wobei die Entscheidungserklärungsinformationen an den Astknoten des geschulten Klassifikators für jeden Astknoten gespeichert werden durch:
Zuordnen eines Etiketts zu jedem Datenelement, das in der Sandbox-Umgebung ausgeführt wird, auf der Basis der Aufteilungsfunktion für den Astknoten, wie auf eines der ersten Datenelemente angewendet, das mit dem jeweiligen Datenelement gepaart ist, das in der Sandbox-Umgebung ausgeführt wird;
Bestimmen einer Aufteilungsfunktion für die Datenelemente, die in der Sandbox-Umgebung ausgeführt werden, auf der Basis der zugeordneten Etiketten und
Speichern von Entscheidungserklärungsinformationen in dem geschulten Klassifikator an dem Astknoten auf der Basis der bestimmten Aufteilungsfunktion für die Datenelemente, die in der Sandbox-Umgebung ausgeführt werden.

8. Computerprogramm, Computerprogrammprodukt oder Logik, das bzw. die auf einem greifbaren computerlesbaren Medium codiert ist, wobei das Computerprogramm, das Computerprogrammprodukt oder die Logik Anweisungen umfasst, die bei Ausführung durch einen Prozessor dazu eingerichtet sind, zu bewirken, dass der Prozessor das Verfahren nach einem der Ansprüche 6 oder 7 durchführt.

## Revendications

1. Système comprenant un processeur ; et une mémoire pour stocker des données utilisées par le processeur, dans lequel le processeur sert à :
accéder à des premiers éléments de données servant à entraîner un classificateur pour classifier un trafic de réseau crypté relativement à des logiciels malveillants suspectés dangereux ;
accéder à des seconds éléments de données, les seconds éléments de données étant distincts des premiers éléments de données et ne servant pas à effectuer de classification à l'aide du classificateur ;
produire le classificateur entraîné sur la base d'un entraînement à l'aide des premiers éléments de données, le classificateur comprenant un arbre de décision (200) présentant des nœuds branches (210a-210g) et des nœuds feuilles (220a-220h) et dans lequel le classificateur est entraîné à l'aide d'un algorithme de forêt aléatoire comprenant la définition, au niveau de chaque nœud branche, d'une fonction de division pour la division des premiers éléments de données ;
stocker dans le classificateur entraîné, en tant qu'informations déterminantes de décision (251) au niveau de nœuds branches de l'arbre de décision, des informations des premiers éléments de données ; et
stocker également dans le classificateur entraîné au niveau de nœuds branches de l'arbre de décision, en association avec les informations déterminantes de décision, des informations explicatives de décision (252, 253) des seconds éléments de données, les informations explicatives de décision comprenant un indicateur de compromission, IOC, déterminé sur la base d'un comportement d'éléments de données jugés suspects lorsqu'ils sont exécutés dans un environnement de bac à sable lors d'un entraînement du classificateur mais dans lequel l'IOC n'est pas disponible lors d'une classification pour classifier un élément ;
dans lequel le stockage des informations explicatives de décision comprend, pour chaque nœud branche du classificateur entraîné :
l'attribution d'une étiquette à chaque élément de données exécuté dans l'environnement de bac à sable sur la base de la fonction de division pour le nœud branche appliquée à l'un des premiers éléments de données qui est pairé avec l'élément de données respectif exécuté dans l'environnement de bac à sable ;
la détermination d'une fonction de division pour les éléments de données exécutés dans l'environnement de bac à sable sur la base des étiquettes attribuées ; et
le stockage, dans le classificateur entraîné, d'informations explicatives de décision au niveau du nœud branche sur la base de la fonction de division déterminée pour les éléments de données exécutés dans l'environnement de bac à sable.

2. Système selon la revendication 1 et dans lequel le processeur sert également à :
utiliser le classificateur formé pour classifier un élément ;
fournir des informations provenant du classificateur entraîné concernant une raison de classifier l'élément, les informations comportant les informations explicatives de décision.

3. Système comprenant un processeur ; et une mémoire pour stocker des données utilisées par le processeur, dans lequel le processeur sert à :
accéder à un classificateur entraîné pour classifier un trafic de réseau crypté relativement à des logiciels malveillants suspectés dangereux, le classificateur entraîné comprenant un arbre de décision (200) présentant des nœuds branches (210a-210g) et des nœuds feuilles (220a-220h) et étant entraîné sur la base au moins de premiers éléments de données et à l'aide d'un algorithme de forêt aléatoire comprenant la définition, au niveau de chaque nœud branche, d'une fonction de division pour diviser les premiers éléments de données, l'arbre de décision comportant, au niveau de nœuds branches, à la fois des informations déterminantes de décision (251) des premiers éléments de données et des informations explicatives de décision (252, 253) des seconds éléments de données, les seconds éléments de données étant distincts des premiers éléments de données et ne servant pas à effectuer de classification à l'aide du classificateur, dans lequel les informations explicatives de décision comprennent un indicateur de compromis, IOC, déterminé sur la base d'un comportement d'éléments de données jugés suspects lorsqu'ils sont exécutés dans un environnement de bac à sable lors d'un entraînement du classificateur, mais dans lequel l'IOC n'est pas disponible lors d'une classification pour classifier un élément ;
recevoir un élément de données crypté à classifier ;
utiliser le classificateur entraîné pour classifier l'élément de données crypté ; et
fournir des informations de décision d'élément concernant une raison de classifier l'élément à classifier, les informations de décision d'élément étant basées sur au moins une partie des informations explicatives de décision ;
dans lequel les informations explicatives de décision sont stockées au niveau des nœuds branches du classificateur entraîné en, pour chaque nœud branche :
attribuant une étiquette à chaque élément de données exécuté dans l'environnement de bac à sable sur la base de la fonction de division pour le nœud branche appliquée à l'un des premiers éléments de données qui est pairé avec l'élément de données respectif exécuté dans l'environnement de bac à sable ;
déterminant une fonction de division pour les éléments de données exécutés dans l'environnement de bac à sable sur la base des étiquettes attribuées ; et
stockant, dans le classificateur entraîné, des informations explicatives de décision au niveau du nœud branche sur la base de la fonction de division déterminée pour les éléments de données exécutés dans l'environnement de bac à sable.

4. Système selon l'une quelconque des revendications précédentes et dans lequel le classificateur comprend une pluralité d'arbres de décision.

5. Système selon la revendication 1, dans lequel l'IOC indique l'une des actions suivantes :
l'accès au registre Windows ou à certaines parties sensibles de celui-ci ;
la modification ou tentative de modification d'un fichier exécutable ;
l'exécution de parties de mémoire d'une manière jugée suspecte ;
la création ou la tentative de création d'un fichier DLL.

6. Procédé mis en œuvre par ordinateur comprenant la réalisation par un processeur des actions suivantes :
l'accès à des premiers éléments de données servant à entraîner un classificateur pour classifier un trafic de réseau crypté relativement à des logiciels malveillants suspectés dangereux ;
l'accès à des seconds éléments de données, les seconds éléments de données étant distincts des premiers éléments de données et ne servant pas à effectuer de classification à l'aide du classificateur ;
la production du classificateur entraîné sur la base d'un entraînement à l'aide des premiers éléments de données, le classificateur comprenant un arbre de décision (200) présentant des nœuds branches (210a-210g) et des nœuds feuilles (220a-220h) et dans lequel le classificateur est entraîné à l'aide d'un algorithme de forêt aléatoire comprenant la définition, au niveau de chaque nœud branche, d'une fonction de division pour la division des premiers éléments de données ;
le stockage dans le classificateur entraîné, en tant qu'informations déterminantes de décision (251) au niveau de nœuds branches de l'arbre de décision, d'informations des premiers éléments de données ; et
le stockage également dans le classificateur entraîné au niveau de nœuds branches de l'arbre de décision, en association avec les informations déterminantes de décision, d'informations explicatives de décision (252, 253) des seconds éléments de données, les informations explicatives de décision comprenant un indicateur de compromis, IOC, déterminé sur la base d'un comportement d'éléments de données jugés suspects lorsqu'ils sont exécutés dans un environnement de bac à sable lors d'un entraînement du classificateur mais dans lequel l'IOC n'est pas disponible lors d'une classification pour classifier un élément ;
dans lequel le stockage des informations explicatives de décision comprend, pour chaque nœud branche du classificateur entraîné :
l'attribution d'une étiquette à chaque élément de données exécuté dans l'environnement de bac à sable en fonction de la fonction de division pour le nœud branche appliquée à l'un des premiers éléments de données qui est pairé avec l'élément de données respectif exécuté dans l'environnement de bac à sable ;
la détermination d'une fonction de division pour les éléments de données exécutés dans l'environnement de bac à sable sur la base des étiquettes attribuées ; et
le stockage, dans le classificateur entraîné, d'informations explicatives de décision au niveau du nœud branche sur la base de la fonction de division déterminée pour les éléments de données exécutés dans l'environnement de bac à sable.

7. Procédé mis en œuvre par ordinateur comprenant la réalisation par un processeur des actions suivantes :
l'accès à un classificateur entraîné pour classifier un trafic de réseau crypté relativement à des logiciels malveillants suspectés dangereux, le classificateur entraîné comprenant un arbre de décision (200) présentant des nœuds branches (210-210g) et des nœuds feuilles (220a-220h) et étant entraîné sur la base au moins de premiers éléments de données et à l'aide d'un algorithme de forêt aléatoire comprenant la définition, au niveau de chaque nœud branche, d'une fonction de division pour diviser les premiers éléments de données, l'arbre de décision compotant, au niveau des nœuds branches, à la fois des informations déterminantes de décision (251) des premiers éléments de données et des informations explicatives de décision (252, 253) de seconds éléments de données, les seconds éléments de données étant distincts des premiers éléments de données et ne servant pas à effectuer de classification à l'aide du classificateur, dans lequel les informations explicatives de décision comprennent un indicateur de compromis, IOC, déterminé sur la base d'un comportement d'éléments de données jugés suspects lorsqu'ils sont exécutés dans un environnement de bac à sable lors d'un entraînement du classificateur, mais dans lequel l'IOC n'est pas disponible lors d'une classification pour classifier un élément ;
la réception d'un élément de données crypté à classifier ;
l'utilisation du classificateur entraîné pour classifier l'élément de données crypté ; et
la fourniture d'informations de décision d'élément concernant une raison de classifier l'élément à classifier, les informations de décision d'élément étant basées sur au moins une partie des informations explicatives de décision ;
dans lequel les informations explicatives de décision sont stockées au niveau des nœuds branches du classificateur entraîné en, pour chaque nœud branche :
attribuant une étiquette à chaque élément de données exécuté dans l'environnement de bac à sable sur la base de la fonction de division pour le nœud branche appliquée à l'un des premiers éléments de données qui est pairé avec l'élément de données respectif exécuté dans l'environnement de bac à sable ;
déterminant une fonction de division pour les éléments de données exécutés dans l'environnement de bac à sable sur la base des étiquettes attribuées ; et
stockant, dans le classificateur entraîné, des informations explicatives de décision au niveau du nœud branche sur la base de la fonction de division déterminée pour les éléments de données exécutés dans l'environnement de bac à sable.

8. Programme d'ordinateur, produit de programme d'ordinateur ou logique codé sur un support tangible lisible par ordinateur, le programme d'ordinateur, produit de programme d'ordinateur ou logique comprenant des instructions qui, à leur exécution par un processeur, sont adaptées pour amener le processeur à réaliser le procédé selon l'une quelconque des revendications 6 ou 7.
